# EUROPEAN PATENT SPECIFICATION

(11) **EP 1 290 678 B1**
(45) Date of publication and mention of the grant of the patent: **28.03.2007**
(21) Application number: 01923910.2
(22) Date of filing: 02.05.2001
(51) Int. Cl.: G10L 15/26

(54) **METHOD AND SYSTEM FOR ADAPTIVE DISTRIBUTED SPEECH RECOGNITION**
VERFAHREN UND SYSTEM FÜR ADAPTIVE VERTEILTE SPRACHERKENNUNG
PROCEDE ET SYSTEME DE RECONNAISSANCE VOCALE DISTRIBUEE ADAPTATIVE

(30) Priority: 08.06.2000 US 590708
(43) Date of publication of application: 12.03.2003
(73) Proprietor: Nokia Corporation, 02150 Espoo (FI)
(72) Inventor: HARIHARAN, Ramalingam, FIN-33721 Tampere (FI)
(74) Representative: Style, Kelda Camilla Karen
(86) International application number: PCT/IB2001/000755
(87) International publication number: WO 2001/095312

(56) References cited:
- EP-A- 0 671 721
- US-A- 5 857 147
- US-A- 5 956 683
- "SPEECH RECOGNITION FOR TELEPHONE ACCESS SYSTEMS" IBM TECHNICAL DISCLOSURE BULLETIN,US,IBM CORP. NEW YORK, vol. 33, no. 12, 1 May 1991 (1991-05-01), pages 106-109, XP000121606 ISSN: 0018-8689

## Description

### Field of the Invention

The present invention relates generally to the field of speech recognition and, more particularly, to distributed speech recognition systems and methodology.

### Background of the Invention

Speech recognition technology allows a user of a communications network to access computer services without using a keyboard to type in words, while a spoken language system provides user-computer interaction which enables natural conversations between people and machines. In particular, Distributed Speech Recognition (DSR) systems allow a user to give a verbal command, or dictate a memo to a speech processing device at one location and have the spoken words converted into written texts by a speech recognizer at another location. For example, the user can speak into a wireless device such as a mobile phone but the voice is recovered by a network device at a remote location. One of the emerging applications of DSR is a Voice Browser or a Wireless Application Protocol (WAP) Browser which allows anyone who has a telephone to access Internet-based services without being near a computer. DSR has many benefits. For example, voice interaction eliminates the need of having a keypad on a mobile device where physical space is limited for keypads and displays.

A DSR system is roughly divided into a front-end portion and a back-end portion. The front-end algorithm converts the input speech waveform signal into feature parameters which provide a compact representation of input speech, while retaining the information essential for speech recognition. The back-end algorithm performs the actual recognition task, taking feature parameters as input and performing a template-matching operation to compare the features with reference templates of the possible words to be recognized.

In traditional Automatic Speech Recognition (ASR), both the front end and back end are located at the speech recognition server which is accessed through the Public Switched Telephone Network (PSTN) speech connection. If the speech signal comes from a mobile phone user, significant degradation of speech recognition accuracy may result from speech coding inaccuracies and radio transmission errors. Moreover, if the recognition results from ASR are used to drive a service which returns data to the user terminal, ' separate speech and data connections between the user terminal and the service are required.

DSR solves these problems of ASR by placing the front-end at the user terminal and transmitting feature parameters instead of the encoded speech waveform to the ASR server. Usually, feature parameters require less bandwidth for radio transmission than the encoded speech waveform. The feature parameters can, therefore, be sent to the ASR server using a data channel. This will eliminate the need for a high bit rate speech channel. Moreover, a low rate data transmission is less affected by noise and distortion, as compared to a speech channel transmission. Furthermore, if the data channel is equipped with error correction coding, the radio interface errors are no longer an issue. The full duplex data connection used to transmit the features to the ASR server can be used to send the response data (or the encoded speech) from the ASR server to the user terminal.

While DSR solves the problems with reduced ASR recognition accuracy and requires only one data connection for speech and data, it has the disadvantage that a standardized algorithm must exist for calculating feature parameters. The European Telecommunications Standard Institute (ETSI) is currently in the process of establishing the standard for DSR signal processing. ETSI has published in ETSI ES 201 108 vi.1.2 a standard algorithm for front-end feature extraction and their transmission. The standard algorithm calculates feature vectors with fourteen components for each 10ms frame of speech. In particular, this ETSI publication covers the algorithm for front-end feature extraction to create Mel-Frequency Cepstral Coefficients (MFCC).

Another disadvantage of the present DSR methodology is that the ASR server must be able to receive and use the features coming from the standard front end. Therefore, to support DSR, ASR vendors will have to modify their ASR engines to accommodate the DSR features. Depending on the technology used, this may be a minor undertaking or a technical challenge. If the feature vectors are sent to the ASR server using the fourteen components for each 10ms frame of speech, the resulting bit rate would be 44.8 kbps, assuming floating point coefficients and no framing overhead. This bit rate is clearly too high for cellular data channels. For this reason, the ETSI standard also includes a feature compression algorithm to provide an efficient way to transmit the coefficients in a lower data transmission rate. This compression algorithm combines 24 feature vectors, each of which is calculated from one 10ms frame of speech, to a multiframe of 143 bytes. This yields a bit rate of roughly 4767 bps. The ETSI publication also includes the formatting of the extracted features with error protection into a bitstream for transmissions, and the decoding of the bitstream to generate the front-end features at a back-end receiver together with the associated algorithm for channel error mitigation. Nokia ETSI-STQ WI008 also discloses a front-end algorithm for feature vector extraction. Cepstrum is a term for the inverse Fourier Transform of the logarithm of the power spectrum of a signal, and mel-frequency warping is a process of non-linearly modifying the scale of the Fourier transform representation of the spectrum. From the mel-frequency warped Fourier transform representation of the logmagnitude spectrum, a set of cepstral coefficients or parameters are calculated to represent the speech signals. The extracted cepstral coefficients or parameters are known as feature vectors. They are conveyed to the back-end recognizer to perform the actual probability estimation and classification in order to reconstruct the spoken words. Because different speakers have different voices, talking speeds, accents and other factors that can affect a speech recognition system, it is important to have a good quality of feature vectors-to ensure a good performance in speech recognition. Furthermore, environmental noises and distortion can also deteriorate the quality of feature vectors and influence the performance of the speech recognition system.

U.S. Patent No. 5,956,683, discloses a DSR system wherein extracted features are transmitted from a portable phone to a central communication center which has a word decoder for determining a linguistic estimate of the speech from the extracted features and providing an action signal to a transmitter in the communication center. Under a control element of the communication center, the transmitter sends estimated words or a command signal to the portable phone. The estimated words or the command signal will be used for dialing a phone number, providing information to the display screen of the portable phone, or relaying messages from an answering machine.

The performance of a speech recognition system, in general, correlates significantly with the number of features extracted from the front end and processed by the back end. Therefore, it is desirable to increase the amount of features extracted in the front-end in order to increase the performance. However, this also increases the complexities in the back-end recognizer situated at the server side because the recognizer has to process all the received features. In particular, in a DSR system where a back-end network recognizer is used to process the speech data from a plurality of terminals, the processing power and time of the back-end recognizer imposes a limit on the amount of extracted features that can be transmitted from each terminal to be simultaneously processed. In the existing DSR system, the amount of extracted features is fixed and is usually determined by the maximum number of terminals that will share a back-end recognizer. In such a system, the preset level of speech recognition performance is determined based on the worst case traffic condition at the back-end recognizer. As such, the highest attainable performance is not usually fully attained.

It-is advantageous and desirable to provide a DSR system with improved performance such that the performance of the speech recognition system can be extended beyond the limit derived from a worst-case analysis.

### Summary of the Invention

It is an object of the invention to provide an adaptive or scalable distributed speech recognition (DSR) method and system wherein the amount of the speech-related features extracted from a voice signal by a front-end device can be varied in accordance with the prevailing traffic conditions of the back-end recognizer in a network.

Accordingly, one aspect of the present invention is a method for distributed speech recognition as set forth in claim 1.

Another aspect of the present invention is a distributed speech recognition system as set forth in claim 10.

The third aspect of the present invention is a distributed speech recognition system as set forth in claim 18.

The present invention will become apparent upon reading the description taken in conjunction with Figures 1 to 3.

### Brief Description of the Drawings

Figure 1 is a diagrammatic presentation of a communications network showing a plurality of wireless terminals coupled to a server so as to allow a plurality of front-end devices to share a back-end device at the server.
Figure 2 is a block diagram illustrating a DSR (Distributed Speech Recognition) system having a front-end portion and a back-end portion.
Figure 3 is a flow chart illustrating the method of DSR, according to the present invention.

### Best Mode for Carrying Out the Invention

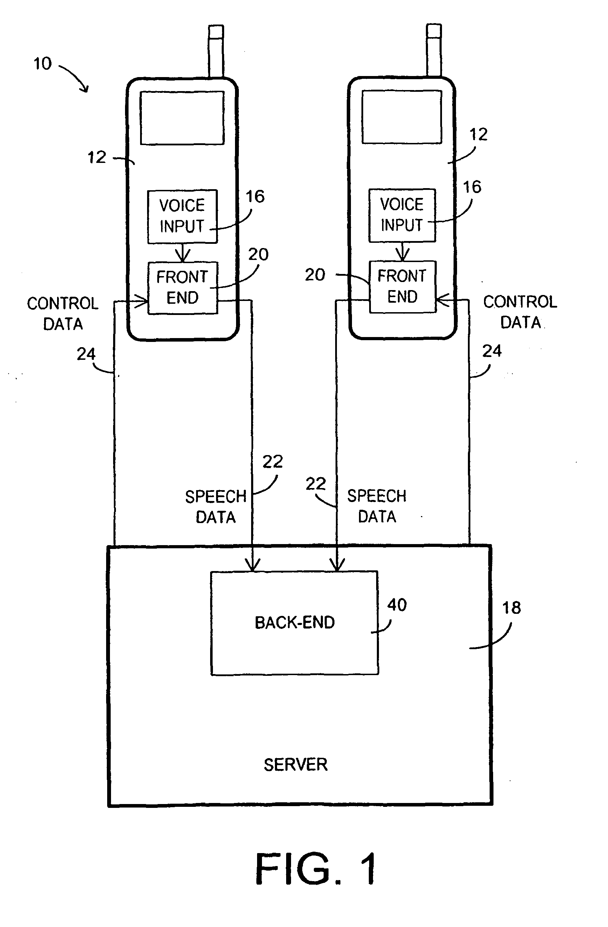

Figure 1 shows a communications network **10** having a plurality of terminals **12** coupled to a server **18.** The terminals **12** can be mobile phones or other wireless or wired devices. Each of the terminals **12** has a voice input device such as a microphone **16** to allow a user to give verbal commands or input spoken messages to the terminals **12.** The spoken voice of the speaker is converted into voice signals by the microphone **16.** Each of the terminals **12** includes a front-end processor **20** responsive to a voice signal from such a microphone **16** to extract feature vectors and/or other speech-related information from the voice signals. The extracted features are conveyed as speech data **22** to a back-end speech recognizer device **40** situated at the server side. The front-end processor **20** is configurable such that it is capable of producing speech data with different complexities on demand. For example, the front-end processor **20** can be configured at anytime to extract more or less speech-related features from a speech frame. When the speech recognizer **40** is simultaneously used to process the speech data from a large number of terminals **12,** the speech recognizer **40** may require the terminals **12** to reduce the complexity in the feature extraction in order to accommodate the channel traffic condition at the speech recognizer **40.** Accordingly, the server **18** sends a signal containing control data **24** to the terminals **12** indicating the optimal amount of feature vectors under the prevailing traffic condition. Upon receiving control data **24** from the server **18,** the terminals **12** adjust the extracted amount of speech features as required. But when the channel traffic is light, the speech recognizer **40** can process speech data with higher complexity in order to improve the DSR performance. Accordingly, the speech recognizer **40** sends a new set of control data **24** to the engaging terminals **12** to specify the amount of the speech features to be extracted. This adaptive or scalable DSR system can help the user to obtain better speech recognition performance at the cost of higher complexity when there is a smaller number of terminals **12** simultaneously accessing the speech recognizer **40** at the server **18.** Another criterion that could be used to determine the amount of extracted features is the prevailing environmental condition or signal-to-noise ratio (SNR) at the terminal side. It is understood that a cleaner environment requires a smaller set of extracted features without unduly compromising the speech recognition performance. A smaller set of feature vectors can lower the overall complexity of the recognition process and hence the computation time in the back-end portion.

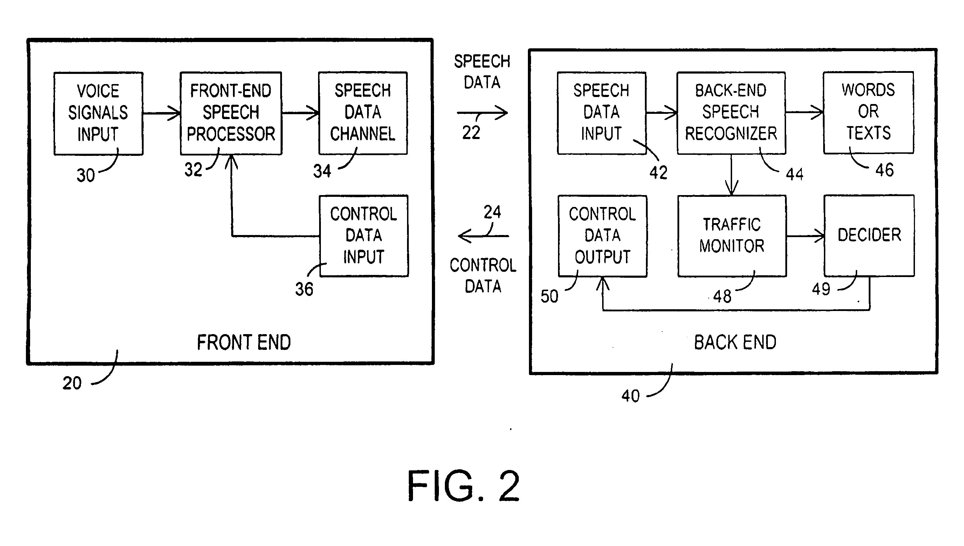

Figure 2 shows the front-end device **20** and the back-end device **40** of the adaptive DSR apparatus of the present invention. As shown, the front-end device **20** includes a receiver **30** to receive voice signals from the voice input device **16,** and a front-end speech processor **32** to extract feature vectors from the voice signals and to convey the extracted features to a data channel **34.** The speech-related extracted features are conveyed as speech data **22** to the back-end device **40** for further processing. The back-end device **40** includes a speech data receiver **42** to receive speech data **22** from a plurality of terminals **12,** and a back-end speech recognizer **44** which converts speech data **22** into words or texts **46.** The back-end device **40** further includes a traffic monitoring device **48** to determine the workload of the back-end speech recognizer **44** according to the number of simultaneous users and the complexity of the speech data **22** as received from the engaging terminals **12.** The traffic monitoring device **48** provides a signal indication of the current workload of the back-end speech recognizer **44** to a decider **49.** The decider can decide that the back-end has reached its capacity, even though more users are trying to access the back-end device **40** for speech processing services. Accordingly, decider **49** determines a reduced amount of features to be extracted by the front-end processor **32** under the prevailing traffic condition. The deduced amount of extracted features is then signaled by the decider to a control data device **50** which conveys control data **24** to the front-end device **20.** The control data **24** can be conveyed in the form of control bits or any suitable form.

Similarly, when the channel traffic on the server side is low, it is possible to increase the amount of extracted features in order to improve the speech recognition performance, especially when the prevailing environmental noise conditions at the terminal side may affect the recognition task. Accordingly, a suitable amount of extracted features is conveyed as the control data **24** to the front-end device **20** of the engaging terminals **12.** At the front-end side, a receiving device **36** conveys the received control data **24** to the front-end speech processor **32** so that the amount of extract features can be adjusted as required.

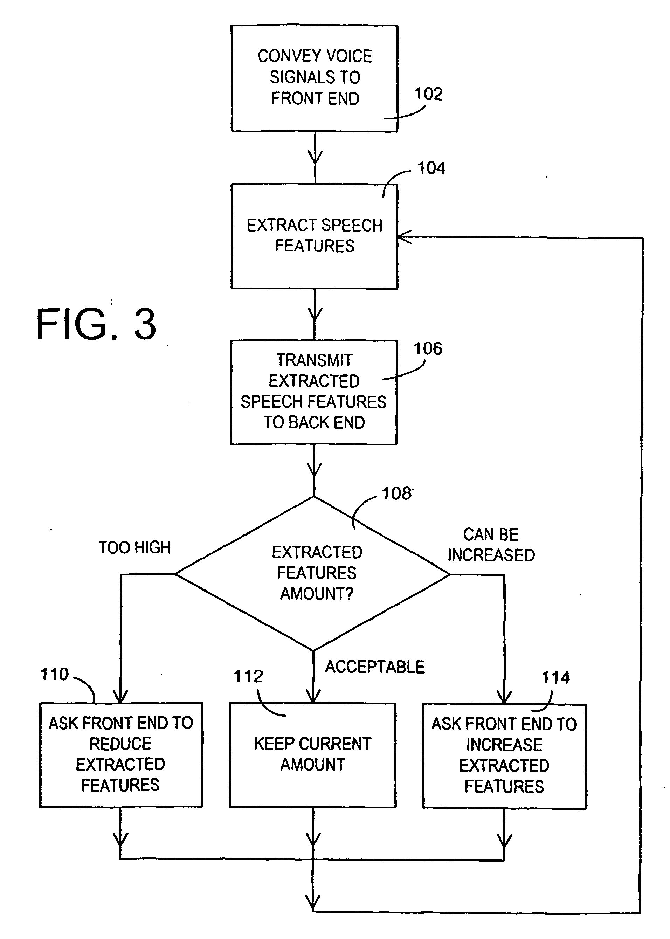

The method of the adaptive DSR, according to the present invention, is illustrated in Figure 3. As shown, when one or more users speak to the terminals **12** to ask the server **18** to perform a certain task, the speech or voice signals are conveyed to the front-end device **20** at step **102.** According to the amount of extracted features currently required by the back-end device **40,** the front-end device **20** extracts a set of feature vectors from the voice signals at step **104.** The extracted features are transmitted to the back-end device for speech recognition at step **106.** Based on the prevailing conditions, such as the channel traffic conditions at the server side and environmental noise conditions at the user side, the amount of extracted features are accessed at step **108.** If it is decided that the amount of extracted features is too high, the terminals **12** are asked to reduce the extracted amount at step **110.** If the extracted amount is acceptable, the terminals **12** are asked to keep the current extracted amount at step **112.** However, this step is optional because it does not affect the outcome of the process. If the prevailing conditions allow for an increased amount of extracted features, the terminals **12** are asked to adjust the amount accordingly at step **114.** The command signal specifying the required amount for feature extraction is sent to the front-end device **20** as the process loops back to step **104.**

Thus, the method, the device and the system for the adaptive distributed speech recognition, according to the present invention, have been disclosed in the preferred embodiments thereof. It will be understood by those skilled in the art that the foregoing and various other changes, omissions and deviations in the form and detail thereof may be made without departing from the scope of this invention. For example, the most commonly used approach for carrying out the feature extraction is the cepstral approach and the extracted feature vectors are the mel-frequency cepstral coefficients. However, the method, device and system for adaptive speech recognition of the present invention are not limited to the cepstral approach. They are equally applied to any other speech recognition approach.
Furthermore, in the cepstral approach, the complexity of the front-end feature extraction depends on how the speech signals are sampled, how the Fast Fourier Transform is carried out, how the transformed spectrum is processed and how the mel-frequency cepstrum coefficients are computed. It is possible to increase or decrease the amount of extracted feature vectors by adjusting the various processing steps in the cepstrum approach. It is also possible to adjust the complexity of the feature extraction by replacing the cepstrum approach with another different approach.

The communication terminals as used hereinabove to explain the present invention include mobile phones, communicators and other hand-held devices. However, the terminals can be any communication devices that are physically separated from the server such that they require a distributed speech recognition system for speech signal processing. In a narrow sense, the server is an Automatic Speech Recognition (ASR) server. In a broad sense, it can be generally referred to as a central communication center. The terminals can be coupled to the server via a radio link, but they can also be linked to the server through a different medium.

Therefore, the embodiments and method described hereinabove should be considered illustrative, but not restricting. The invention is defined by the appended claims.

## Claims

1. A method for distributed speech recognition usable in a communications network having at least one server (18) coupled to a plurality of terminals (12), wherein the speech recognition method is used to recognize words from voice signals conveyed to the terminals (12), said method comprising the steps of;
1) extracting (104) speech features from the voice signals; and
2) transmitting (106) the extracted speech features to the server (18) in order to recognize words therefrom, **characterized in that** the amount of the extracted speech features can be adjusted (108, 110, 112, 114) based on prevailing conditions affecting speech recognition.

2. The method of claim 1, wherein the terminals have means to extract the speech features and the server has means to determine the amount of speech features to be extracted by the terminals based on the prevailing conditions, said method further comprising the step of:
3) conveying a command signal from the server to the terminals in order to adjust the amount of speech features to be extracted by the terminals.

3. The method of claim 2, wherein the command signal includes control bits indicative of the adjusted amount of extracted speech features.

4. The method of claim 1, wherein the prevailing conditions are determined by the number of terminals simultaneously transmitting the extracted speech feature to the server for speech recognition.

5. The method of claim 1, wherein the prevailing conditions are determined by environment noise conditions at the terminals.

6. The method of claim 1, wherein the extracted speech features include cepstral coefficients.

7. The method of claim 1, wherein the extracted speech features include mel-frequency cepstral coefficients.

8. The method of claim 1, wherein the terminals include mobile phones, each of which is coupled to the server via a radio link.

9. The method of claim 1, wherein the extracted speech features are transmitted to the server via a data channel.

10. A distributed speech recognition system usable for speech recognition processing in a network having at least one server (18) coupled to a plurality of terminal (12), said system comprising:
a front-end device (20) resisting at one or more of the terminals (12) arranged to extract speech failures from voice signals conveyed to the terminals; and
a back-end device (40) situated at the server (18) arranged to recognize words from the extracted speech features, **characterized in that** the front-end device (20) is configurable so that the amount of the speech features extracted by the front-end device (20) can be controlled by the server (18) depending on prevailing conditions affecting the speech recognition processing.

11. The system of claim 10, further comprising means for converting a voice of a user to voice signals.

12. The system of claim 11, wherein the voice converting means comprise a microphone.

13. The system of claim 10, wherein the terminals comprise one or more mobile phones, each of which is coupled to the server via a radio link.

14. The system of claim 10, where the front-end device comprises means for transmitting the extracted speech feature to the back-end device.

15. The system of claim 10, wherein the back-end device comprises means for monitoring the prevailing conditions.

16. The system of claim 10, wherein the prevailing conditions include channel traffic at the back-end device.

17. The system of claim 10, wherein the back-end device is capable of sending a signal to the front-end device in order to adjust the amount of speech features to be extracted by the front-end device.

18. A distributed speech recognition system usable in a network having at least one server (18) coupled to a plurality of terminals (12), wherein the system is used to recognize words from voice signals conveyed to the terminals (12), said system comprising:
a front-end device (20) residing at each of the terminals (12) arranged for extracting an amount of speech features from the voice signal, **characterized in that** the amount of extracted speech features is adjustable;
a back-end device (40) residing at the server (18) arranged to recognize words from the extracted speech features;
means for conveying the extracted features from the front-end device (20) to the back-end device (40), and
means for conveying a command signal from the server (18) to the front-end device (20) indicating the amount of speech features to be extracted by the front-end device (20).

19. The system of claim 18, wherein the amount of Speech features to be extracted as indicated in the command signal is determined by the server based on prevailing conditions affecting the back-end device.

20. The system of claim 19, wherein the prevailing conditions include channel traffic conditions related to the number of terminals simultaneously accessing the back-end device for speech recognition purposes.

21. The system of claim 18, wherein the amount of speech features to be extracted as indicated in the command signal is determined by the server based on prevailing environmental noise conditions affecting the front-end device.

22. A front-end device (20) for use in a mobile terminal (12), comprising:
a processor, responsive to a voice signal, to extract speech features for speech recognition from voice signals conveyed to the terminal (12), and to convey the extracted features from the terminal (12), said processor arranged to adjust the amount of the speech features extracted, in response to a command signal received by the terminal (12).

23. A back-end device (40) for use at a server (18), comprising:
a recogniser configured to recognise words from extracted speech features, and a decider configured to control an amount of the speech features extracted depending upon prevailing conditions affecting speech recognition processing.

## Patentansprüche

1. Verfahren für eine verteilte Spracherkennung, das in einem Kommunikationsnetzwerk mit zumindest einem Server (18), der mit einer Vielzahl von Endgeräten (12) gekoppelt ist, verwendbar ist, wobei das Spracherkennungsverfahren verwendet wird, um aus an die Endgeräte (12) übermittelten Sprechsignalen Wörter zu erkennen, mit den Schritten:
1) Extrahieren (104) von Sprachmerkmalen aus den Sprechsignalen; und
2) Übertragen (106) der extrahierten Sprachmerkmale an den Server (18), um aus diesen Wörtern zu erkennen, **dadurch gekennzeichnet, dass** die Menge der extrahierten Sprachmerkmale basierend auf vorherrschenden Bedingungen, die eine Spracherkennung beeinflussen, angepasst werden kann (108, 110, 112, 114).

2. Verfahren gemäß Anspruch 1, bei dem die Endgeräte eine Einrichtung aufweisen, um die Sprachmerkmale zu extrahieren, und der Server eine Einrichtung aufweist, um die Menge von Sprachmerkmalen, die von den Endgeräten zu extrahieren sind, basierend auf den vorherrschenden Bedingungen zu bestimmten, mit dem weiteren Schritt:
3) Übermitteln eines Befehlssignals von dem Server an die Endgeräte, um die Menge von Sprachmerkmalen anzupassen, die von den Endgeräten zu extrahieren sind.

3. Verfahren gemäß Anspruch 2, bei dem das Befehlssignal Steuerbits umfasst, die für die angepasste Menge von extrahierten Sprachmerkmalen bezeichnend sind.

4. Verfahren gemäß Anspruch 1, bei dem die vorherrschenden Bedingungen durch die Anzahl von Endgeräten bestimmt werden, die das extrahierte Sprachmerkmal zur Spracherkennung gleichzeitig an den Server übertragen.

5. Verfahren gemäß Anspruch 1, bei dem die vorherrschenden Bedingungen durch Umgebungsrauschbedingungen an den Endgeräten bestimmt werden.

6. Verfahren gemäß Anspruch 1, bei dem die extrahierten Sprachmerkmale Cepstralkoeffizienten umfassen.

7. Verfahren gemäß Anspruch 1, bei dem die extrahierten Sprachmerkmale Mel-Frequenz-Cepstralkoeffizienten umfassen.

8. Verfahren gemäß Anspruch 1, bei dem die Endgeräte Mobiltelefone umfassen, von denen jedes über eine Funkverbindung mit dem Server gekoppelt ist.

9. Verfahren gemäß Anspruch 1, bei dem die extrahierten Sprachmerkmale über einen Datenkanal an den Server übertragen werden.

10. Verteiltes Spracherkennungssystem, das für eine Spracherkennungsverarbeitung in einem Netzwerk mit zumindest einem Server (18), der mit einer Vielzahl von Endgeräten (12) gekoppelt ist, verwendbar ist, wobei das System aufweist:
eine Vorderendevorrichtung (20), befindlich an einem oder mehreren der Endgeräte (12), die eingerichtet ist zum Extrahieren von Sprachmerkmalen aus an die Endgeräte übermittelten Sprechsignalen;
eine Hinterendevorrichtung (40), befindlich an dem Server (18), die eingerichtet ist zum Erkennen von Wörtern aus den extrahierten Sprachmerkmalen, **dadurch gekennzeichnet, dass** die Vorderendevorrichtung (20) konfigurierbar ist, so dass die Menge der von der Vorderendevorrichtung (20) extrahierten Sprachmerkmale von dem Server (18) abhängig von vorherrschenden Bedingungen, die die Spracherkennungsverarbeitung beeinflussen, gesteuert werden kann.

11. System gemäß Anspruch 10, zusätzlich mit einer Einrichtung zum Umwandeln einer Stimme eines Benutzers in Sprechsignale.

12. System gemäß Anspruch 11, wobei die Stimmenumwandlungseinrichtung ein Mikrofon aufweist.

13. System gemäß Anspruch 10, bei dem die Endgeräte ein oder mehrere Mobiltelefone aufweisen, von denen jedes über eine Funkverbindung mit dem Server gekoppelt ist.

14. System gemäß Anspruch 10, bei dem die Vorderendevorrichtung eine Einrichtung zum Übertragen der extrahierten Sprachmerkmale an die Hinterendevorrichtung aufweist.

15. System gemäß Anspruch 10, bei dem die Hinterendevorrichtung eine Einrichtung zum Überwachen der vorherrschenden Bedingungen aufweist.

16. System gemäß Anspruch 10, bei dem die vorherrschenden Bedingungen Kanalverkehr an der Hinterendevorrichtung umfassen.

17. System gemäß Anspruch 10, bei dem die Hinterendevorrichtung fähig ist zum Senden eines Signals an die Vorderendevorrichtung, um die Menge von Sprachmerkmalen anzupassen, die von der Vorderendevorrichtung zu extrahieren sind.

18. Verteiltes Spracherkennungssystem, das in einem Netzwerk mit zumindest einem Server (18), der mit einer Vielzahl von Endgeräten (12) gekoppelt ist, verwendbar ist, wobei das System verwendet wird, um aus an die Endgeräte (12) übermittelten Sprechsignalen Wörter zu erkennen, mit:
einer Vorderendevorrichtung (20), befindlich an jedem der Endgeräte (12), die eingerichtet ist zum Extrahieren einer Menge von Sprachmerkmalen aus dem Sprechsignal, **dadurch gekennzeichnet, dass** die Menge von extrahierten Sprachmerkmalen anpassbar ist;
einer Hinterendevorrichtung (40), befindlich an dem Server (18), die eingerichtet ist zum Erkennen von Wörtern aus den extrahierten Sprachmerkmalen;
einer Einrichtung zum Übermitteln der extrahierten Merkmale von der Vorderendevorrichtung (20) an die Hinterendevorrichtung (40), und
einer Einrichtung zum Übermitteln eines Befehlssignals von dem Server (18) an die Vorderendevorrichtung (20), das die Menge von Sprachmerkmalen bezeichnet, die von der Vorderendevorrichtung (20) zu extrahieren sind.

19. System gemäß Anspruch 18, bei dem die Menge von zu extrahierenden Sprachmerkmalen wie in dem Befehlssignal bezeichnet von dem Server basierend auf vorherrschenden Bedingungen bestimmt wird, die die Hinterendevorrichtung beeinflussen.

20. System gemäß Anspruch 19, bei dem die vorherrschenden Bedingungen Kanalverkehrsbedingungen bezüglich der Anzahl von Endgeräten umfassen, die zu Spracherkennungszwecken gleichzeitig auf die Hinterendevorrichtungen zugreifen.

21. System gemäß Anspruch 18, bei dem die Menge von zu extrahierenden Sprachmerkmalen wie in dem Befehlssignal bezeichnet von dem Server basierend auf vorherrschenden Umgebungsrauschbedingungen bestimmt wird, die die Vorderendevorrichtung beeinflussen.

22. Vorderendevorrichtung (20) zur Verwendung in einem Mobilendgerät (12), mit:
einem Prozessor, der auf ein Sprechsignal anspricht, um aus an das Endgerät (12) übermittelten Sprechsignalen Sprachmerkmale für eine Spracherkennung zu extrahieren, und um die extrahierten Merkmale von dem Endgerät (12) zu übermitteln, wobei der Prozessor eingerichtet ist, die Menge der extrahierten Sprachmerkmale in Erwiderung auf ein von dem Endgerät (12) empfangenes Befehlssignal anzupassen.

23. Hinterendevorrichtung (40) zur Verwendung an einem server (18), mit:
einer Erkennungseinrichtung, die konfiguriert ist, um aus extrahierten Sprachmerkmalen Wörter zu erkennen, und einer Entscheidungseinrichtung, die konfiguriert ist, um eine Menge der extrahierten Sprachmerkmale abhängig von vorherrschenden Bedingungen zu steuern, die eine Spracherkennungsverarbeitung beeinflussen.

## Revendications

1. Procédé pour la reconnaissance de la parole répartie utilisable dans un réseau de communication ayant au moins un serveur (18) couplé à une pluralité de terminaux (12), dans lequel le procédé de reconnaissance de la parole est utilisé pour reconnaître des mots à partir de signaux vocaux acheminés aux terminaux (12), ledit procédé comprenant les étapes consistant à :
1) extraire (104) des caractéristiques vocales à partir des signaux vocaux ; et
2) transmettre (106) les caractéristiques vocales extraites au serveur (18) de manière à reconnaître des mots à partir de celles-ci, **caractérisé en ce que** la quantité des caractéristiques vocales extraites peut être ajustée (108, 110, 112, 114) sur la base de conditions prédominantes affectant la reconnaissance de la parole.

2. Procédé selon la revendication 1, dans lequel les terminaux ont des moyens pour extraire les caractéristiques vocales, et le serveur a des moyens pour déterminer la quantité de caractéristiques vocales destinées à être extraites par les terminaux sur la base des conditions prédominantes, ledit procédé comprenant en outre l'étape consistant à :
3) acheminer un signal d'instruction du serveur aux terminaux de manière à ajuster la quantité de caractéristiques vocales destinées à être extraites par les terminaux.

3. Procédé selon la revendication 2, dans lequel le signal d'instruction comprend des bits de contrôle indicatifs de la quantité ajustée de caractéristiques vocales extraites.

4. Procédé selon la revendication 1, dans lequel les conditions prédominantes sont déterminées par le nombre de terminaux transmettant simultanément la caractéristique vocale extraite au serveur pour la reconnaissance de la parole.

5. Procédé selon la revendication 1, dans lequel les caractéristiques prédominantes sont déterminées par des conditions de bruit ambiant au niveau des terminaux.

6. Procédé selon la revendication 1, dans lequel les caractéristiques vocales extraites comprennent des coefficients cepstraux.

7. Procédé selon la revendication 1, dans lequel les caractéristiques vocales extraites comprennent des coefficients cepstraux de fréquence mel ("mel-frequency").

8. Procédé selon la revendication 1, dans lequel les terminaux comprennent des téléphones mobiles, chacun desquels est couplé au serveur via une liaison radio.

9. Procédé selon la revendication 1, dans lequel les caractéristiques vocales extraites sont transmises au serveur via une voie de transmission de données.

10. Système de reconnaissance de la parole répartie utilisable pour le traitement de reconnaissance de la parole dans un réseau ayant au moins un serveur (18) couplé à une pluralité de terminaux (12), ledit système comprenant:
un dispositif de niveau d'entrée (20) se trouvant au niveau d'un ou plusieurs des terminaux (12), agencé pour extraire des caractéristiques vocales à partir de signaux vocaux acheminés aux terminaux ; et
un dispositif d'arrière-plan (40) situé au niveau du serveur (18), agencé pour reconnaître des mots à partir des caractéristiques vocales extraites,
**caractérisé en ce que** le dispositif de niveau d'entrée (20) est configurable de manière que la quantité des caractéristiques vocales extraites par le dispositif de niveau d'entrée (20) puisse être contrôlé par le serveur (18) en fonction de conditions prédominantes affectant le traitement de reconnaissance de la parole.

11. Système selon la revendication 10, comprenant en outre des moyens pour convertir une voix d'un utilisateur en signaux vocaux.

12. Système selon la revendication 11 dans lequel les moyens de conversion vocale comprennent un microphone.

13. Système selon la revendication 10 dans lequel les terminaux comprennent un ou plusieurs téléphones mobiles, chacun desquels est couplé au serveur via une liaison radio.

14. Système selon la revendication 10 dans lequel le dispositif de niveau d'entrée comprend des moyens pour transmettre la caractéristique vocale extraite au dispositif d'arrière-plan.

15. Système selon la revendication 10 dans lequel le dispositif d'arrière-plan comprend des moyens pour le monitorage des conditions prédominantes.

16. Système selon la revendication 10 dans lequel les conditions prédominantes comprennent le trafic de canaux au niveau du dispositif d'arrière-plan.

17. Système selon la revendication 10 dans lequel le dispositif d'arrière-plan est en mesure de transmettre un signal au dispositif de niveau d'entrée de manière à ajuster la quantité de caractéristiques vocales destinées à être extraites par le dispositif de niveau d'entrée.

18. Système de reconnaissance de la parole répartie utilisable dans un réseau ayant au moins un serveur (18) couplé à une pluralité de terminaux (12), dans lequel le système est utilisé pour reconnaître des mots à partir de signaux vocaux acheminés aux terminaux (12), ledit système comprenant :
un dispositif de niveau d'entrée (20) se trouvant au niveau de chacun des terminaux (12), agencé pour extraire une quantité de caractéristiques vocales à partir du signal vocal, **caractérisé en ce que** la quantité de caractéristiques vocales est ajustable ;
un dispositif d'arrière-plan (40) se trouvant au niveau du serveur (18), agencé pour reconnaître des mots à partir des caractéristiques vocales extraites ;
des moyens pour acheminer les caractéristiques extraites du dispositif de niveau d'entrée (20) au dispositif d'arrière-plan (40), et
des moyens pour acheminer un signal d'instruction du serveur (18) au dispositif de niveau d'entrée (20) indiquant la quantité de caractéristiques vocales destinées à être extraites par le dispositif de niveau d'entrée (20).

19. Système selon la revendication 18, dans lequel la quantité de caractéristiques vocales à extraire comme indiquée dans le signal d'instruction est déterminée par le serveur sur la base de conditions prédominantes affectant le dispositif d'arrière-plan.

20. Système selon la revendication 19, dans lequel les conditions prédominantes comprennent des conditions de trafic de canal relatives au nombre de terminaux accédant simultanément au dispositif d'arrière-plan pour des besoins de reconnaissance de la parole.

21. Système selon la revendication 18, dans lequel la quantité de caractéristiques vocales à extraire comme indiquée dans le signal d'instruction est déterminée par le serveur sur la base de conditions de bruit ambiant affectant le dispositif de niveau d'entrée.

22. Dispositif d'avant-plan (20) pour l'utilisation dans un terminal mobile (12), comprenant :
un processeur sensible à un signal vocal, pour extraire des caractéristiques vocales pour une reconnaissance vocale à partir de signaux vocaux acheminés au terminal (12) et transporter les caractéristiques extraites à partir du terminal (12), ledit processeur étant agencé pour ajuster la quantité de caractéristiques vocales extraites, en réponse à un signal d'instruction reçu par le terminal.

23. Dispositif d'arrière-plan (40) pour l'utilisation au niveau d'un serveur (18), comprenant ;
un dispositif de reconnaissance configuré pour reconnaître des mots à partir des caractéristiques vocales extraites et un dispositif de décision configuré pour contrôler une quantité de caractéristiques vocales extraites en fonction de conditions prédominantes affectant le traitement de reconnaissance de la parole.
